# EUROPEAN PATENT SPECIFICATION

(11) **EP 4 198 582 B1**
(45) Date of publication and mention of the grant of the patent: **25.11.2026**
(21) Application number: 20952788.6
(22) Date of filing: 10.09.2020
(51) Int. Cl.: G02B 5/04, G02B 23/04, G02B 27/10, G02B 27/12, G01S 7/481, G01S 17/08

(54) **COMPOSITE PRISM BASED ON ISOSCELES PRISM, AND LASER RANGING TELESCOPE COMPRISING COMPOSITE PRISM**
VERBUNDPRISMA AUF BASIS EINES GLEICHSCHENKLIGEN PRISMA UND LASERENTFERNUNGSTELESKOP MIT DEM VERBUNDPRISMA
PRISME COMPOSITE À BASE DE PRISME ISOCÈLE, ET TÉLESCOPE DE TÉLÉMÉTRIE LASER COMPRENANT UN PRISME COMPOSITE

(43) Date of publication of application: 21.06.2023
(73) Proprietor: Chongqing Hylon Co., Ltd., Chongqing 401329 (CN)
(72) Inventor: ZHU, Jie, Chongqing 401329 (CN); GAO, Mingxiao, Chongqing 401329 (CN)
(74) Representative: Gulde & Partner
(86) International application number: PCT/CN2020/114580
(87) International publication number: WO 2022/052000

(56) References cited:
- CN-A- 102 252 563
- CN-A- 105 445 942
- CN-A- 105 806 308
- CN-A- 106 950 689
- CN-A- 106 950 689
- CN-A- 107 219 621
- CN-A- 108 572 357
- CN-A- 110 058 419
- CN-U- 204 302 569
- US-A1- 2013 283 662
- US-A1- 2015 370 077
- US-A1- 2017 074 650

## Description

### Background of the Present Invention

The present invention relates to the field of telescopic ranging, and particularly relates to a composite prism based on an isosceles prism and a laser ranging telescope using the same.

### Description of Related Arts

Existing telescopes are not merely a fashionable consumer good for telescopic observation. Some telescopes also have the functions of emitting laser rapidly to determine target distance, target velocity and the like, and have become a kind of indispensible measuring tool. Patent applications with Publication No. CN105806308A and CN107219621A disclose a binocular ranging telescope. First prisms in a combination of prisms all have only two reflecting surfaces, so that the transmission direction of a beam decided thereby is harmful to installation of laser emission and laser receiving devices and a projection device. It is hard to install the laser emission and laser receiving devices on the side of the telescope close to the middle axis, which restricts the diversity of the structural styles and functions of the ranging telescope.

Various prism arrangements for this purpose are known in the art. For instance, US 2013/283662 A1 discloses a riflescope having a composite prism assembly which includes a roof prism, a half pentaprism, and an isosceles prism. A spectro-film is arranged between the half pentaprism and the isosceles prism to separate the light paths.

CN 106950689 A discloses a laser ranging monocular telescope that also utilizes a prism arrangement comprising a half-penta prism and a Schmidt roof prism. This arrangement is used to fold the optical path and integrate a laser emission system with the observation system.

US 2015/0370077 A1 discloses a beam splitting system for laser ranging that includes a roof half-pentaprism, an isosceles prism, and a compensating prism. This system is designed to provide different light splitting combinations for laser rangefinders.

### Summary of the Present Invention

In order to obtain a ranging telescope featuring compact structure, small size and diversified functions and structural styles, the present invention provides a composite prism based on an isosceles prism and a laser ranging telescope using the same.

To achieve the objective, the present invention provides a composite prism according to claim 1.

The invention also provides a laser ranging telescope incorporating said composite prism, an eye lens, an objective lens, a laser device and a laser receiver, wherein the laser device and receiver are arranged on the light path defined for the light beam of the second wavelength.

In an optical system of the laser ranging telescope, the composite prism based on an isosceles prism integrates a telescope observation system, a laser emission system, a laser receiving system and a sighting and display system reasonably, so that the laser device and the laser receiver both can be mounted on the side close to the middle axis of the telescope, and therefore, the performance and structural style of the laser ranging telescopic are diversified, and the size is reduced.

### Brief Description of the Drawings

FIG. 1 is a schematic diagram of an optical system of a binocular laser ranging telescope in the present invention.
FIG. 2 is a schematic diagram of a composite prism and a projection device in the present invention.
FIG. 3 is a schematic diagram of the optical system of the binocular laser ranging telescope enabling an LCD graduating display lens. This figure is merely exemplary and is not according to the invention. It is only disclosed for illustrative as well as comparative purposes.
FIG. 4 is a schematic diagram of the optical system of a monocular laser ranging telescope. This figure is not according to the invention.

### Detailed Description of the Preferred Embodiment

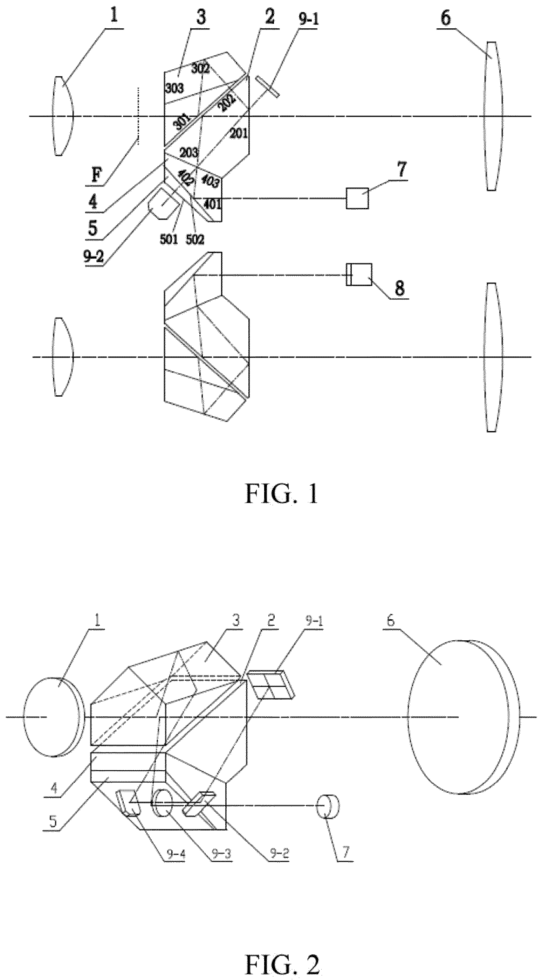

Embodiment 1: shown in FIG. 1 and FIG. 2. A binocular ranging telescope includes two objective lenses 6, two eye lenses 1, two composite prisms, a laser device 7, a laser receiver 8 and a projection device. They are combined to form an optical system of a binocular ranging telescope through the composite prism.

The composite prism includes a first prism 2, a second prism 3, a third prism 4 and a compensating prism 5, wherein the first prism 2 is an isosceles prism, the second prism 3 is a roof prism, the third prism 4 is a half-penta prism, and the compensating prism 5 is a wedge prism. A third surface III 403 of the third prism 4 is glued with a third surface I 203 of the first prism 2, and a beam splitting film which reflects light with first wavelength and transmits light with second wavelength and light with third wavelength is coated to the glued surface. A second surface IV 502 of the compensating prism 5 is glued with a second surface III 402 of the third prism 4, and a beam splitting film which reflects light with second wavelength and transmits light with third wavelength is coated to the glued surface. A first surface IV 501 of the compensating prism 5 is perpendicular to the optical axis of a beam with third wavelength.

The objective lens, the composite prism and the eye lens form a monocular telescope. Two monocular telescopes are parallel and are connected through the middle axis, so that the optical axes of the two lens cones area parallel to form the binocular telescope. In one of the lens cone, the laser device, the composite prism and the objective lens form a laser emission system, and the laser emission system and the telescope share the composite prism and the objective lens. In the other lens cone, the objective lens, the composite prism and the laser receiver form the laser receiving system, and the laser receiving system and the monocular telescope share the objective lens and the composite prism. The projection device includes a display 9-1, a first reflector 9-2, a second reflector 9-4 and a lens 9-3. The first reflector 9-2, the second reflector 9-4 and the lens 9-3 are disposed at the bottom of the composite prism of the right lens cone, and the display 9-1 is disposed on the side surface of the composite prism of the right lens cone.

Light with third wavelength emitted by the display 9-1 of the projection device penetrates through the lens 9-3 after being reflected by the first reflector 9-2, then enters the compensating prism 5 of the lens cone on the right side after being reflected by the second reflector 9-4, then penetrates through the compensating prism 5 and the third surface III 403 of the third prism 4 to enter the first prism 2, is imported into a beam with first wavelength of the first prism 2 and finally forms an image of the display in a position (position shown by F in FIG. 1) of a focal plane of the objective lens of the lens cone on the right side. The image contains a graduating pattern of the laser ranging telescope and a pattern for displaying measuring information.

The light with first wavelength from an object enters the telescope 6, then enters the first surface I 201 of the first prism 2, is emitted from the second surface I 202 thereof after being reflected by the second surface I 202 and the third surface I 203 of the first prism 2 and the first surface I 201 thereof, then enters the second prism 3, and is emitted from the third surface II 303 after being reflected by the roof surface 302 and the first surface II 301 of the second prism in sequence to image the object to the focal plane of the objective lens, and the image of the object is overlapped with the image of the display in the lens cone on the right side. Through amplification by the eye lens, telescopic observation and sighting for the object are achieved.

The light with second wavelength from the laser device enters from the first surface III 401 of the third prism 4, enters the first prism 2 through the third surface III 403 after being reflected by the second surface III 402 of the third prism 4, is emitted from the first surface I 201 of the prism after being reflected by the second surface I 202 of the first prism 2, and is collimated by the objective lens and is emitted to the object sighted by the telescope.

The light with second wavelength reflected by the sighted object is gathered by the objective lens of the other lens cone and enters from the first surface I 202 of the first prism 2, penetrates through the third surface I 203 to enter the third prism 4 after being reflected by the second surface I 202 of the first prism 2, is reflected by the second surface III 402 of the third prism, and is emitted from the first surface III 401 of the prism to enter the laser receiver. The laser ranging telescope calculates a subject distance according to a process from emitting laser to the object to receiving the laser, and displays the measuring information through the above display. The projection image of the display is then observed by the eye lens to acquire the related information.

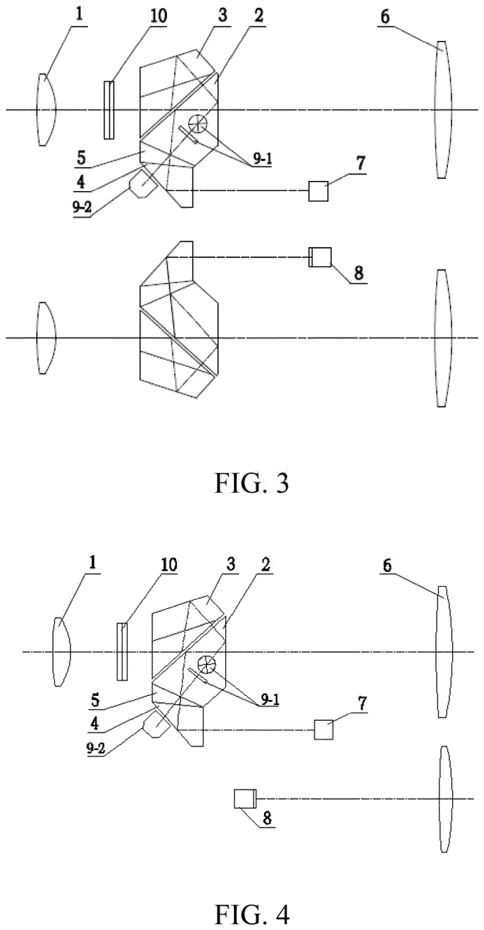

Example 2 is not according to the invention and is intended for illustrative as well as comparative purposes: as shown in FIG. 3, in the laser ranging telescope, a graduating display lens 10 is arranged between an eye lens 1 and a composite prism. The graduating display lens 10 is a transmission type LCD graduating display lens or an OLCD graduating display lens which is mounted on the focal plane of an objective lens.

A second surface IV 502 of the compensating prism 5 in the composite prism is glued with a third surface I 203 of the first prism 2, and a beam splitting film which reflects light with first wavelength and transmits light with second wavelength and light with third wavelength is coated to the glued surface. A first surface IV 501 of the compensating prism 5 is glued with a third surface III 403 of the third prism 4, and the glued surface is perpendicular to a beam with second wavelength. The third prism 4 and the compensating prism 5 can be made from different glass materials.

At the time, after the display is replaced by an illumination light source 9-1, a projection device is turned into an illumination device. Light with third wavelength emitted by the illumination light source 9-1 penetrates through the lens 9-3 after being reflected by the first reflector 9-2, enters the third prism 4 after being reflected by the second reflector 9-4, then penetrates through the compensating prism 5 to enter the first prism 2 and is imported into the beam with first wavelength of the first prism 2, so as to provide night illumination for the LCD graduating display lens.

The light with first wavelength from an object enters the telescope 6, then enters the first surface I 201 of the first prism 2, is emitted from the second surface I 202 thereof after being reflected by the second surface I 202 and the third surface I 203 of the first prism 2 and the first surface I 201 thereof, then enters the second prism 3, and is emitted from the third surface II 303 after being reflected by the roof surface 302 and the first surface II 301 of the second prism in sequence to image the object to the focal plane of the objective lens. The image of the object in the lens cone on the right side is overlapped with the graduating display lens. Through amplification by the eye lens, telescopic observation and sighting for the object are achieved.

The light with second wavelength from the laser device enters from the first surface III 401 of the third prism 4, enters the compensating prism 5 through the third surface III 403 after being reflected by the second surface III 402 of the third prism 4, penetrates through the compensating prism 5 to enter the first prism 2, is emitted from the first surface I 201 of the prism after being reflected by the second surface I 202 of the first prism 2, and is collimated by the objective lens and is emitted to the object sighted by the telescope.

The light with second wavelength reflected by the sighted object is gathered by the objective lens of the other lens cone and enters from the first surface I 202 of the first prism 2, penetrates through the third surface I 203 to enter the compensating prism 5 after being reflected by the second surface I 202 of the first prism 2, penetrates through the compensating prism 5 to enter the third prism 4, and is emitted from the first surface III 401 of the prism to enter the laser receiver after being reflected by the second surface III 402 of the third prism.

The laser ranging telescope calculates a subject distance according to a process from emitting laser to the object to receiving the laser, and displays the measuring information on the graduating display lens. The projection image of the graduating display lens is then observed by the eye lens to acquire the related information.

Embodiment 3: FIG. 4 shows an optical system of a monocular laser ranging telescope. Embodiment 3 is not according to the invention.

The present invention is suitable for the technology of the binocular laser ranging telescope, which is suitable for the monocular laser ranging telescope.

## Claims

1. A composite prism based on an isosceles prism, comprising a first prism (2), a second prism (3), a third prism (4), wherein the first prism (2) is the isosceles prism, and the second prism (3) is a roof prism;
wherein a third surface III (403) of the third prism (4) is glued with a third surface I (203) of the first prism (2), thereby forming a first glued surface,
wherein a beam splitting film is coated to the first glued surface,
the prisms (2, 3, 4) and their respective surfaces are arranged relative to one another to define a predetermined light path of a light beam of a first wavelength, such that:
a first surface I (201) of the first prism (2) is arranged to receive the light beam;
a second surface I (202), the third surface I (203), and the first surface I (201) of the first prism (2) are arranged to successively reflect the light beam and direct it for emission from the second surface I (202) towards the second prism (3);
a first surface II (301) of the second prism (3) is arranged to receive the light beam from the first prism (2); and
a roof surface (302) and the first surface II (301) of the second prism (3) are arranged to reflect the light beam towards a third surface II (303) of the second prism (3) for emission from the composite prism,
**characterised in that** the third prism (3) is a half-penta prism.

2. The composite prism based on an isosceles prism according to Claim 1, further comprising a compensating prism (5),
wherein a second surface IV (502) of the compensating prism (5) is glued with a second surface III (402) of the third prism (4), thereby forming a second glued surface, to which a second beam splitting film is coated; and
wherein the arrangement of prisms (2, 3, 4) defines a further light path for a light beam of a second wavelength such that:
the second surface I (202) of the first prism (2) is arranged to reflect the light beam of the second wavelength received from the first surface I (201) through the first glued surface and into the third prism (4), and the second surface III (402) is arranged to reflect the light beam of the second wavelength for emission from a first surface III (401) of the third prism (4).

3. The composite prism based on an isosceles prism according to Claim 2, wherein:
the second surface III (402) is arranged to reflect a light beam of the second wavelength received from the first surface III (401) of the third prism (4) through the third surface III (403) and into the first prism (2), and the second surface I (202) of the first prism (2) is arranged to reflect the light beam of the second wavelength for emission from the first surface I (201) of the first prism (2).

4. A laser ranging telescope, comprising the composite prism according to Claim 2 or 3, an eye lens (1), an objective lens (6), a laser device (7) and a laser receiver (8), wherein the laser device (7) and the laser receiver (8) are arranged on the light path defined by the arrangement of prisms (2, 3, 4) for the light beam of the second wavelength.

5. The laser ranging telescope according to Claim 4, further comprising a projection device, wherein the projection device comprises a display (9-1), a first reflector (9-2), a lens (9-3) and a second reflector (9-4);
wherein the projection device and the composite prism are arranged relative to one another to define a light path for a light beam of a third wavelength emitted from the display (9-1), such that the first reflector (9-2) is arranged to direct the light beam of the third wavelength to the lens (9-3), the lens (9-3) is arranged to direct the light beam of the third wavelength to the second reflector (9-4), the second reflector (9-4) is arranged to direct the light beam of the third wavelength into the compensating prism (5) such that it penetrates through the compensating prism (5) and the third prism (4) to enter the first prism (2) to be imported into the path of the light beam of the first wavelength for imaging between the composite prism and the eye lens (1).

## Patentansprüche

1. Verbundprisma auf Grundlage eines gleichschenkligen Prismas, umfassend ein erstes Prisma (2), ein zweites Prisma (3) und ein drittes Prisma (4), wobei das erste Prisma (2) das gleichschenklige Prisma ist und das zweite Prisma (3) ein Dachprisma ist;
wobei eine dritte Fläche III (403) des dritten Prismas (4) mit einer dritten Fläche I (203) des ersten Prismas (2) verklebt ist, wodurch eine erste Klebefläche gebildet ist,
wobei ein Strahlenteilungsüberzug auf die erste Klebefläche aufgebracht ist, die Prismen (2, 3, 4) und ihre jeweiligen Flächen relativ zueinander angeordnet sind, um einen vorgegebenen Lichtweg eines Lichtstrahls einer ersten Wellenlänge zu definieren, derart, dass:
eine erste Fläche I (201) des ersten Prismas (2) zum Aufnehmen des Lichtstrahls angeordnet ist;
eine zweite Fläche I (202), die dritte Fläche I (203) und die erste Fläche I (201) des ersten Prismas (2) angeordnet sind, um den Lichtstrahl nacheinander zu reflektieren und ihn zur Abstrahlung von der zweiten Fläche I (202) in Richtung des zweiten Prismas (3) zu lenken;
eine erste Fläche II (301) des zweiten Prismas (3) zum Aufnehmen des Lichtstrahls von dem ersten Prisma (2) angeordnet ist; und
eine Dachfläche (302) und die erste Fläche II (301) des zweiten Prismas (3) zum Reflektieren des Lichtstrahls in Richtung einer dritten Fläche II (303) des zweiten Prismas (3) zur Abstrahlung von dem Verbundprisma angeordnet sind, **dadurch gekennzeichnet, dass** das dritte Prisma (3) ein Halb-Penta-Prisma ist.

2. Verbundprisma auf Grundlage eines gleichschenkligen Prismas nach Anspruch 1, ferner umfassend ein kompensierendes Prisma (5),
wobei eine zweite Fläche IV (502) des kompensierenden Prismas (5) mit einer zweiten Fläche III (402) des dritten Prismas (4) verklebt ist, wodurch eine zweite Klebefläche gebildet ist, auf die ein zweiter Strahlenteilungsüberzug aufgebracht ist; und
wobei die Anordnung der Prismen (2, 3, 4) einen weiteren Lichtweg für einen Lichtstrahl einer zweiten Wellenlänge definiert, derart, dass:
die zweite Fläche I (202) des ersten Prismas (2) zum Reflektieren des Lichtstrahls der zweiten Wellenlänge, der von der ersten Fläche I (201) empfangen wird, durch die erste Klebefläche und in das dritte Prisma (4) angeordnet ist und die zweite Fläche III (402) zum Reflektieren des Lichtstrahls der zweiten Wellenlänge zur Abstrahlung von einer ersten Fläche III (401) des dritten Prismas (4) angeordnet ist.

3. Verbundprisma auf Grundlage eines gleichschenkligen Prismas nach Anspruch 2, wobei:
die zweite Fläche III (402) zum Reflektieren eines Lichtstrahls der zweiten Wellenlänge, der von der ersten Fläche III (401) des dritten Prismas (4) empfangen wird, durch die dritte Fläche III (403) und in das erste Prisma (2) angeordnet ist und die zweite Fläche I (202) des ersten Prismas (2) zum Reflektieren des Lichtstrahls der zweiten Wellenlänge zur Abstrahlung von der ersten Fläche I (201) des ersten Prismas (2) angeordnet ist.

4. Laser-Entfernungsmessteleskop, umfassend das Verbundprisma nach Anspruch 2 oder 3, ein Okular (1), eine Objektivlinse (6), eine Laservorrichtung (7) und einen Laserempfänger (8), wobei die Laservorrichtung (7) und der Laserempfänger (8) in dem durch die Anordnung der Prismen (2, 3, 4) für den Lichtstrahl der zweiten Wellenlänge definierten Lichtweg angeordnet sind.

5. Laser-Entfernungsmessteleskop nach Anspruch 4, ferner umfassend eine Projektionsvorrichtung, wobei die Projektionsvorrichtung eine Anzeige (9-1), einen ersten Reflektor (9-2), eine Linse (9-3) und einen zweiten Reflektor (9-4) umfasst;
wobei die Projektionsvorrichtung und das Verbundprisma relativ zueinander angeordnet sind, um einen Lichtweg für einen Lichtstrahl einer dritten Wellenlänge zu definieren, der von der Anzeige (9-1) abgestrahlt wird, derart, dass der erste Reflektor (9-2) zum Lenken des Lichtstrahls der dritten Wellenlänge zu der Linse (9-3) angeordnet ist, die Linse (9-3) zum Lenken des Lichtstrahls der dritten Wellenlänge zum zweiten Reflektor (9-4) angeordnet ist, der zweite Reflektor (9-4) zum Lenken des Lichtstrahls der dritten Wellenlänge in das kompensierende Prisma (5) angeordnet ist, sodass er das kompensierende Prisma (5) und das dritte Prisma (4) durchdringt und in das erste Prisma (2) eintritt, um für eine Bildgebung zwischen dem Verbundprisma und dem Okular (1) in den Weg des Lichtstrahls der ersten Wellenlänge eingebracht zu werden.

## Revendications

1. Prisme composite basé sur un prisme isocèle, comprenant un premier prisme (2), un deuxième prisme (3), un troisième prisme (4), dans lequel le premier prisme (2) est le prisme isocèle, et le deuxième prisme (3) est un prisme en toit ;
dans lequel une troisième surface III (403) du troisième prisme (4) est collée avec une troisième surface I (203) du premier prisme (2), formant ainsi une première surface collée,
dans lequel un film de séparation de faisceau est déposé sur la première surface collée, les prismes (2, 3, 4) et leurs surfaces respectives sont disposés les uns par rapport aux autres afin de définir un chemin lumineux prédéterminé d'un faisceau lumineux d'une première longueur d'onde, de sorte que :
une première surface I (201) du premier prisme (2) est disposée pour recevoir le faisceau lumineux ; une deuxième surface I (202), la troisième surface I (203) et la première surface I (201) du premier prisme (2) sont disposées pour réfléchir successivement le faisceau lumineux et le diriger pour l'émission depuis la deuxième surface I (202) vers le deuxième prisme (3) ;
une première surface II (301) du deuxième prisme (3) est disposée pour recevoir le faisceau lumineux en provenance du premier prisme (2) ; et
une surface de toit (302) et la première surface II (301) du deuxième prisme (3) sont disposées pour réfléchir le faisceau lumineux vers une troisième surface II (303) du deuxième prisme (3) pour l'émission depuis le prisme composite, **caractérisé en ce que** le troisième prisme (3) est un prisme demi-penta.

2. Prisme composite basé sur un prisme isocèle selon la revendication 1, comprenant en outre un prisme de compensation (5),
dans lequel une deuxième surface IV (502) du prisme de compensation (5) est collée avec une deuxième surface III (402) du troisième prisme (4), formant ainsi une deuxième surface collée, sur laquelle un deuxième film de séparation de faisceau est déposé ; et
dans lequel l'agencement des prismes (2, 3, 4) définit un autre chemin lumineux pour un faisceau lumineux d'une deuxième longueur d'onde, de sorte que :
la deuxième surface I (202) du premier prisme (2) est disposée pour réfléchir le faisceau lumineux de la deuxième longueur d'onde reçu de la première surface I (201) à travers la première surface collée et dans le troisième prisme (4), et la deuxième surface III (402) est disposée pour réfléchir le faisceau lumineux de la deuxième longueur d'onde pour l'émission depuis une première surface III (401) du troisième prisme (4).

3. Prisme composite basé sur un prisme isocèle selon la revendication 2, dans lequel :
la deuxième surface III (402) est disposée pour réfléchir un faisceau lumineux de la deuxième longueur d'onde reçu de la première surface III (401) du troisième prisme (4) à travers la troisième surface III (403) et dans le premier prisme (2), et la deuxième surface I (202) du premier prisme (2) est disposée pour réfléchir le faisceau lumineux de la deuxième longueur d'onde pour l'émission depuis la première surface I (201) du premier prisme (2).

4. Télescope à télémétrie laser, comprenant le prisme composite selon la revendication 2 ou 3, une lentille oculaire (1), une lentille d'objectif (6), un dispositif laser (7) et un récepteur laser (8), dans lequel le dispositif laser (7) et le récepteur laser (8) sont disposés sur le chemin lumineux défini par l'agencement des prismes (2, 3, 4) pour le faisceau lumineux de la deuxième longueur d'onde.

5. Télescope à télémétrie laser selon la revendication 4, comprenant en outre un dispositif de projection, dans lequel le dispositif de projection comprend un affichage (9-1), un premier réflecteur (9-2), une lentille (9-3) et un deuxième réflecteur (9-4) ;
dans lequel le dispositif de projection et le prisme composite sont disposés l'un par rapport à l'autre pour définir un chemin lumineux pour un faisceau lumineux d'une troisième longueur d'onde émis par l'affichage (9-1), de sorte que le premier réflecteur (9-2) est disposé pour diriger le faisceau lumineux de la troisième longueur d'onde vers la lentille (9-3), la lentille (9-3) est disposée pour diriger le faisceau lumineux de la troisième longueur d'onde vers le deuxième réflecteur (9-4), le deuxième réflecteur (9-4) est disposé pour diriger le faisceau lumineux de la troisième longueur d'onde dans le prisme de compensation (5) de sorte qu'il pénètre à travers le prisme de compensation (5) et le troisième prisme (4) pour pénétrer dans le premier prisme (2) afin d'être importé dans le trajet du faisceau lumineux de la première longueur d'onde pour une formation d'image entre le prisme composite et la lentille oculaire (1).
